# FASCICULE DE BREVET EUROPEEN

(11) **EP 2 887 564 B1**
(45) Date de publication et mention de la délivrance du brevet: **08.03.2017**
(21) Numéro de dépôt: 14198445.0
(22) Date de dépôt: 17.12.2014
(51) Int. Cl.: H04B 7/185, H04B 7/195

(54) **Système de communication par satellite pour un service continu d'accès haut débit sur une zone de couverture terrestre incluant au moins une région polaire comportant une constellation de satellites placés sur orbite circulaire à basse ou moyenne altitude.**
Satelliten Kommunikationsanordnung für einen kontinuiertlichen breitband Zugangsdienst über einer bedekten Erdoberfläche die mindestes ein polares Gebiet enthält mit einer Konstellation von Satelliten auf einer kreisförmigen Umlaufbahn mit niedriger oder mittlerer Höhe.
Satellite communication system for continuous broadband access service over a land covered area including at least one polar region with a constellation of satellites on circular orbit at a low or medium altitude.

(30) Priorité: 23.12.2013 FR 1303063
(43) Date de publication de la demande: 24.06.2015
(73) Titulaire: Thales, 92400 Courbevoie (FR)
(72) Inventeur: Chuberre, Nicolas, 31820 Pibrac (FR); Cote, Judith, 31037 Toulouse (FR); Bruniera, Jean-Jacques, 31120 Lacroix-Falgarde (FR); Benard, Patrick, 06130 Plascassier (FR); Potuaud, Dominique, 31880 La Salvetat Saint Gilles (FR)
(74) Mandataire: Nguyen, Dominique

(56) Documents cités:
- WO-A1-00/41340
- WO-A1-99/56408
- WO-A1-2012/040828
- US-A- 5 666 648
- US-A1- 2003 114 102
- US-A1- 2012 069 943

## Description

La présente invention concerne un système de communication par satellite pour un service continu d'accès haut débit sur une zone de couverture incluant au moins une région polaire. Elle s'applique aux télécommunications large bande, de haute qualité, en particulier en bande C, Ku, Ka ou au delà, pour des terminaux fixes, nomades ou embarqués sur des plateformes mobiles terrestres, aéronautiques ou maritimes . Elle s'applique à tout type de zone de couverture incluant au moins une région polaire nord ou sud. On appelle région polaire une région délimitée par une latitude supérieure à typiquement 60° dans l'hémisphère Nord ou respectivement 60° dans l'hémisphère Sud.

Le document US 6 597 989 décrit un système de communication par satellite optimisé pour assurer une couverture sur les zones de population élevées de l'hémisphère nord. Ce système comporte une constellation de satellites en orbite elliptique avec un apogée inférieur à 4000km et est optimisé pour couvrir en priorité les zones géographiques à forte densité de population de l'hémisphère nord. Ce système est optimisé pour offrir une capacité maximum au-dessus de 25°N de latitude et une capacité réduite entre 25°N et 50°S ce qui n'inclut pas la région du pôle sud.

Le document « Extension of mobile satellite communications to the polar régions » publié en 1984 dans la revue « Space communication and broadcasting 2 » aux pages 33 à 46, décrit une constellation de satellites en orbite basse circulaire inclinée à 90°, les satellites étant disposés à une altitude comprise entre 1400 km et 1600 km, pour assurer un service mobile en bande L, à bas débit et intermittent, sur les zones polaires délimitées par les latitudes 70°Nord et 70° Sud. Ce système présente l'inconvénient de ne pas permettre d'assurer un service haut débit, ni d'assurer un service continu sur les régions polaires .

Les documents US 5 410 728 et US 5 604 920 décrivent une constellation de 66 satellites répartis sur 11 plans d'une orbite inclinée à 86,4° à l'altitude de 781 km pour assurer un service mobile en bande L sur une couverture mondiale incluant les deux pôles. Ce système présente des liaisons en bande ka de raccordement à des stations d'ancrage. La capacité des ressources en bande Ka n'est cependant pas suffisante sur les pôles pour répondre à des besoins futurs identifiés pour 2020. En particulier les besoins de capacité en service haut débit sont évalués à 250 à 400 Mbps, aux latitudes supérieures à 75°Nord et de 4000 Mbps, aux latitudes supérieures à 66°Nord.

Il existe également des systèmes de communication par satellite comportant une constellation de satellites placés sur des orbites très elliptiques, telles que les constellations Molniya ou Toundra, qui permettent de couvrir des régions septentrionales. Cependant, ces constellations présentent un apogée situé à environ 40000km, ce qui entraîne un temps de transit unidirectionnel trop important, supérieur à 300ms, et contribue à dégrader la qualité de service des communications en temps réel avec un terminal. En outre, ces systèmes sont optimisés pour offrir un service continu sur une seule des deux régions polaires.

Le document WO 00/41340 décrit un système de communication par satellites dans lequel des basculements de communication sont réalisés entre les satellites et entre des faisceaux. Tous les basculements sont pilotés à bord des satellites, par l'intermédiaire de liens inter-satellites et de liens entre le satellite et des stations. Cela nécessite d'embarquer, à bord de chaque satellite, des calculateurs, des moyens de routage, et des moyens de communications entre les satellites.

Un premier but de l'invention est de remédier aux inconvénients des systèmes de communication par satellite connus, et de réaliser un système de communication par satellite pour un service continu d'accès haut débit sur une zone de couverture incluant au moins une région polaire Nord ou Sud.

Un deuxième but de l'invention est de réaliser un système de communication par satellite garantissant un temps de transit unidirectionnel de moins de 150 ms gage d'une grande qualité pour les applications de télécommunications interactives à forte contrainte temps réel, telles que la téléphonie et la visiophonie.

Un troisième but de l'invention est de minimiser le coût de déploiement et de maintenance de la constellation de satellites tout en évitant les ceintures de radiations, et de minimiser le nombre de lancements nécessaires au déploiement et au remplacement de satellites défaillants tout en minimisant la consommation de carburant.

Pour cela, l'invention concerne un système de communication par satellite pour un service continu d'accès haut débit sur une zone de couverture terrestre incluant au moins une région polaire, comportant une constellation de satellites placés en orbite elliptique autour de la Terre à basse ou moyenne altitude, des terminaux utilisateurs localisés dans la zone de couverture, au moins deux stations d'ancrage réparties à la surface de la Terre et aptes à assurer des communications bidirectionnelles avec les terminaux utilisateurs par l'intermédiaire d'au moins un satellite défilant au-dessus de la zone de couverture. Le système comporte en outre un réseau de routeurs interconnectés entre eux et au réseau internet mondial par des voies de communication terrestres locales dédiées, chaque station d'ancrage est reliée au réseau internet mondial par l'intermédiaire du réseau de routeurs, et chaque station d'ancrage comporte un dispositif de gestion des ressources et des basculements apte à piloter des basculements des communications entre les satellites défilant successivement au-dessus de la zone de couverture, des basculements des communications entre les stations d'ancrage, et des double basculements simultanés des communications entre des satellites et entre des stations d'ancrage.

Avantageusement, chaque station d'ancrage, chaque routeur, chaque satellite et chaque terminal utilisateur peuvent comporter un récepteur de navigation respectif leur permettant de se synchroniser entre eux et de synchroniser tous les basculements des communications entre les satellites et/ou les stations d'ancrage.

Avantageusement, à chaque instant, les terminaux utilisateurs et les stations d'ancrage assurant les communications vers les terminaux utilisateurs sont situés dans une zone de visibilité d'au moins un satellite et en ce que les zones de visibilité de deux satellites consécutifs comportent une zone de recouvrement appelée zone de basculement, les basculements des communications à destination d'un terminal utilisateur étant réalisés lorsque le terminal utilisateur se trouve dans la zone de basculement.

Avantageusement, le système peut comporter en outre un centre de planification des opérations raccordé aux stations d'ancrage par l'intermédiaire du réseau de routeurs, le centre de planification des opérations étant apte à recevoir régulièrement les éphémérides de chaque satellite de la constellation et à élaborer un plan général de tous les basculements des communications à réaliser successivement au cours du temps entre les satellites et/ou entre les stations d'ancrage.

Avantageusement, chaque station d'ancrage peut comporter au moins deux antennes directives orientables respectivement associées à deux chaînes d'émission et de réception de signaux multiplexés en fréquence, aptes à être respectivement pointées vers deux satellites consécutifs de la constellation et à servir une ou plusieurs cellules utilisateurs simultanément par l'intermédiaire d'un ou de deux satellites consécutifs de la constellation.

Avantageusement, chaque terminal utilisateur comporte au moins une antenne directive associée à au moins une chaîne d'émission et de réception d'un signal radiofréquence sur des liens radiofréquence bidirectionnels établis par une ou deux stations d'ancrage avec un ou deux satellites de la constellation.

Avantageusement, chaque satellite de la constellation peut comporter deux antennes directives orientables associées à des chaînes d'émission et de réception de signaux radiofréquence pour relayer des liaisons radiofréquence établies par deux stations d'ancrage différentes vers des cellules utilisateurs et des moyens de commutation aptes à activer ou interrompre une ou plusieurs liaisons radiofréquence établies par l'une ou l'autre des deux stations d'ancrage avec les cellules utilisateurs.

Avantageusement, le système comporte au moins deux stations d'ancrage situées à l'intérieur ou à l'extérieur de la zone de couverture.

Selon un mode de réalisation particulier, le système comporte deux zones de couverture couvrant les deux régions polaires arctiques et antarctiques, une constellation de satellites placés en orbite elliptique autour de la Terre, sur un seul plan orbital incliné d'un angle compris entre 60° et 90° par rapport au plan équatorial terrestre, les satellites étant répartis autour de la Terre à une altitude inférieure ou égale à 20000 km, des terminaux utilisateurs localisés dans les deux zones de couverture constituées des deux zones polaires aux latitudes respectivement supérieure à +60° et inférieure à -60°, et au moins deux stations d'ancrage (34) par zone de couverture polaire.

Selon un autre mode de réalisation particulier, le système comporte une zone de couverture incluant au moins les deux régions polaires arctiques et antarctiques, une constellation de satellites placés en orbite elliptique autour de la Terre, sur plusieurs plan orbitaux équi-distants les uns des autres et inclinés d'un angle compris entre 60° et 90° par rapport au plan équatorial terrestre, les satellites étant répartis autour de la Terre à une altitude inférieure ou égale à 20000 km, des terminaux utilisateurs localisés dans la zone de couverture, et un ensemble de stations d'ancrage réparties sur la zone de couverture.

Avantageusement, l'orbite des satellites peut être circulaire et les satellites peuvent être equi-répartis autour de la Terre à une altitude inférieure ou égale à 20000 km pour assurer une continuité de service sur une zone de couverture incluant au moins l'une des deux régions polaires et des basculements des communications, successifs au cours du temps, entre les satellites et entre les stations d'ancrage.

D'autres particularités et avantages de l'invention apparaîtront clairement dans la suite de la description donnée à titre d'exemple purement illustratif et non limitatif, en référence aux dessins schématiques annexés qui représentent :
- figure 1a : un schéma d'un premier exemple de constellation, selon l'invention ;
- figure 1b : un schéma d'un deuxième exemple de constellation, selon l'invention ;
- figure 2 : un exemple schématique en coupe illustrant les angles d'élévation minimum des stations d'ancrage et des terminaux et les zones de visibilité d'un satellite par des terminaux utilisateurs et par des stations d'ancrage et une zone de couverture dans laquelle une continuité de service est assurée pour les terminaux utilisateurs, selon l'invention;
- figure 3 : un schéma illustrant les empreintes sur la Terre de différentes zones, vues par deux satellites consécutifs, selon l'invention;
- figure 4 : un exemple de zones d'implantation de trois stations d'ancrage permettant d'assurer un service continu dans toute la zone de couverture incluant un pôle, selon l'invention ;
- figure 5 : une première phase d'un scénario de basculement d'un terminal utilisateur couvert par un faisceau global avec empreinte mobile au sol nécessitant un double basculement dans le cas d'un exemple de configuration au sol de trois terminaux utilisateurs situés dans la zone de couverture et de trois stations d'ancrage situées à l'extérieur de la zone de couverture, selon l'invention ;
- figure 6 : une deuxième phase de basculement correspondant à l'exemple de la figure 5, selon l'invention ;
- figure 7 : une troisième phase de basculement correspondant à l'exemple de la figure 5, selon l'invention ;
- figure 8 : une quatrième phase de basculement correspondant à l'exemple de la figure 5, selon l'invention ;
- figure 9 : un exemple de basculement progressif des terminaux utilisateurs situés dans la zone d'intersection des zones de visibilité de deux satellites consécutifs, selon un mode de réalisation de l'invention ;
- figure 10: un exemple de scénario dans lequel des terminaux utilisateurs sont situés dans trois cellules utilisateurs cell1, cell2, cell3 localisées à différents endroits de la zone de couverture utilisateur, les trois stations d'ancrage étant situées à l'extérieur de la zone de couverture utilisateur, selon un mode de réalisation de l'invention ;
- figure 11a: un exemple de scénario dans lequel des terminaux utilisateurs sont situés dans trois cellules utilisateurs cell1, cell2, cell3 localisées à différents endroits de la zone de couverture utilisateur, les trois stations d'ancrage étant situées à l'intérieur de la zone de couverture utilisateur, selon un autre mode de réalisation de l'invention ;
- figure 11b : une phase de basculement correspondant à l'exemple de la figure 11a, selon l'invention ;
- figure 12 : un exemple d'architecture global du système de communication par satellite, selon l'invention ;
- figure 13: un schéma synoptique d'un exemple d'architecture d'une station d'ancrage, selon l'invention ;
- figures 14a, 14b et 14c : trois schémas synoptiques correspondant à trois exemples d'architecture de terminal utilisateur, selon l'invention ;
- figure 15: un schéma d'un exemple d'architecture de la charge utile d'un satellite de la constellation, selon l'invention ;
- figure 16 : un schéma d'un exemple de basculement des liaisons radiofréquence entre deux satellites, selon l'invention ;
- figure 17 : un schéma d'un exemple de basculement des liaisons radiofréquence entre deux stations d'ancrage, selon l'invention ;
- figure 18 : un schéma d'un exemple de double basculement des liaisons radiofréquence simultanément entre deux satellites et deux stations d'ancrage, selon l'invention ;
- figure 19: un schéma d'un exemple d'architecture d'un routeur, selon l'invention.

Pour relayer des communications dans un délai de temps de transit maximum de 150ms par direction de communication, l'invention consiste à déployer une constellation de satellites sur un plan orbital à basse ou moyenne altitude autour de la Terre, suivant une orbite elliptique 10, et à relier des stations d'ancrage GW1, GW2, GW3 à des points de raccordement du réseau Internet mondial 33 par des moyens de communications terrestres. Dans un cas particulier, l'orbite elliptique peut être par exemple circulaire. Dans le cas ou la zone de couverture utilisateur 13 doit être étendue à des régions de faibles latitudes, la constellation doit être augmentée de plusieurs satellites déployés sur d'autres plans orbitaux de même inclinaison et altitude que le plan orbital initial.

Par exemple, lorsque la zone de couverture utilisateur 13 concerne les deux régions polaires Nord et Sud à des latitudes supérieures à 60°, il est particulièrement avantageux de disposer les satellites S1, S2,..., Sk, de façon équi-répartie sur une orbite circulaire 10 à basse ou moyenne altitude, sur un seul plan incliné d'un angle compris entre 60° et 90° par rapport au plan équatorial. La configuration mono-plan de la constellation permet de minimiser le nombre de satellites nécessaires pour assurer une continuité de service sur les deux pôles et également minimiser le nombre de lancements nécessaires pour le déploiement de la constellation. En outre, cela permet de minimiser le nombre de lancement pour le remplacement d'un éventuel satellite défaillant, tout en diminuant le nombre de manoeuvres nécessaires et optimiser ainsi la consommation de carburant.

Le choix de l'altitude des satellites de la constellation doit tenir compte de la contrainte de temps de transit unidirectionnel maximum fixée à 150 ms et doit tenir compte du délai de transmission de la forme d'onde et des angles d'élévation minimaux pour que les stations d'ancrage et les terminaux puissent communiquer avec les satellites. Les angles d'élévation minimaux dépendent des contraintes opérationnelles des terminaux utilisateurs et des stations d'ancrage. Généralement, l'angle d'élévation minimal pour les terminaux utilisateurs est supérieur à l'angle d'élévation minimal pour les stations d'ancrage. A titre d'exemple non limitatif, l'angle d'élévation minimal peut être choisi de l'ordre de 5° pour les stations d'ancrage et de l'ordre de 10 à 15° pour les terminaux utilisateurs. Dans ce cas, pour offrir des communications à haut débit avec une qualité de service comparable à celle des réseaux terrestres fixe et mobile, il est avantageux que l'altitude des satellites soit inférieure ou égale à environ 20000 km et que les stations d'ancrage puissent être reliées au réseau internet mondial par des moyens de communication terrestres pour garantir un délai de transit unidirectionnel inférieur à 150 ms.

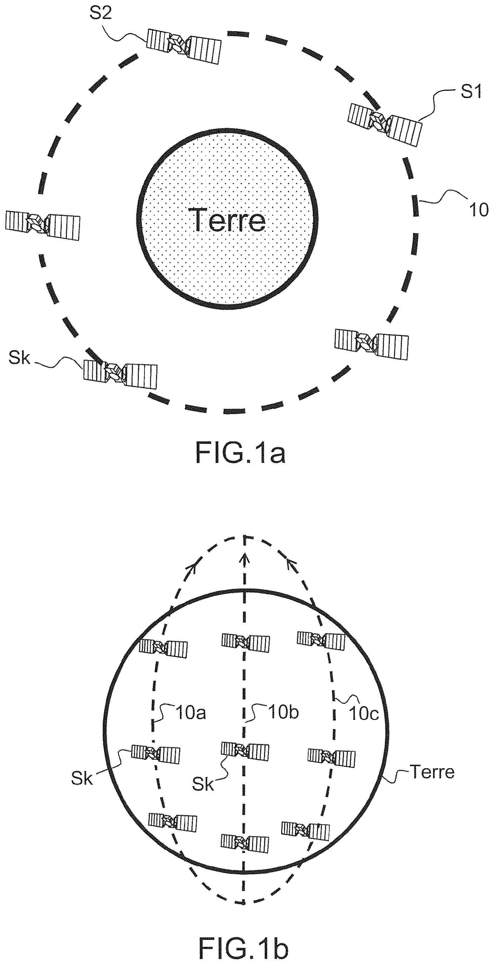

La figure 1a illustre un premier exemple de constellation conforme à l'invention dans laquelle plusieurs satellites sont placés autour de la Terre sur une orbite circulaire passant au-dessus des deux régions polaires. Les satellites S1, S2,...Sk, au nombre de cinq sur l'exemple, sont placés dans un seul plan orbital incliné selon un angle compris entre 80° et 90°, l'angle d'inclinaison étant déterminé de manière classique, par rapport au plan équatorial. L'orbite inclinée d'un angle compris entre 80° et 90° garantit que la couverture réalisée successivement par chaque satellite lorsqu'il défile au-dessus des pôles est uniforme indépendamment de la rotation de la Terre par rapport au plan orbital. Pour respecter la contrainte de temps de transit unidirectionnel inférieur à 150ms et minimiser le nombre de stations d'ancrage devant être déployées pour assurer une continuité de service sur les deux zones de couverture polaires, l'altitude des satellites peut, par exemple, être d'environ 7000 km. Cela permet d'assurer une continuité de service pour les terminaux utilisateurs situés dans les deux zones de couverture polaires aux latitudes respectivement supérieures à 60°N et à 60°S dans les hémisphères Nord et Sud, et opérant avec un angle d'élévation minimal, pouvant être choisi par exemple à 10°.

La figure 1b représente un deuxième exemple de constellation conforme à l'invention dans laquelle plusieurs satellites sont placés autour de la Terre sur différentes orbites circulaires 10a, 10b, 10c passant au-dessus des deux régions polaires. Les satellites Sk sont placés en orbite circulaire autour de la Terre, sur plusieurs plan orbitaux équi-distants les uns des autres et inclinés d'un angle compris entre 80° et 90° par rapport au plan équatorial terrestre. Pour chaque plan orbital, les satellites sont équi-répartis sur l'orbite à une altitude inférieure ou égale à 20000 km.

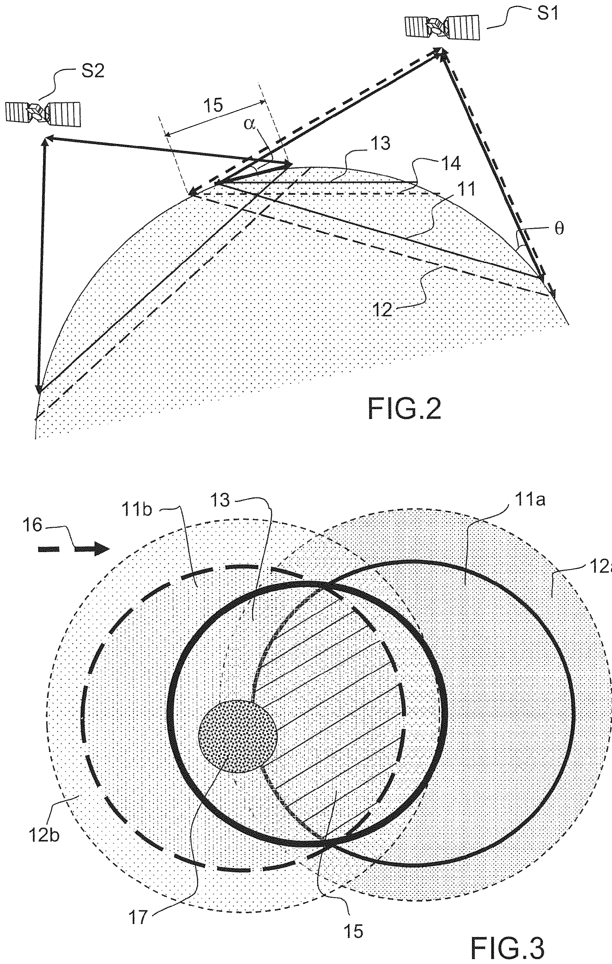

Les angles d'élévation minimaux définissent une zone de visibilité des satellites par les terminaux utilisateurs et une zone de visibilité des satellites par les stations d'ancrage. La figure 2 représente un exemple schématique illustrant l'angle d'élévation minimum θ des stations d'ancrage et l'angle d'élévation minimum α des terminaux utilisateurs et les limites de zones de visibilité 11, 12 du satellite S1 par les terminaux utilisateurs et par les stations d'ancrage ainsi qu'un exemple de limite de zone de couverture 13 correspondant aux terminaux utilisateurs et de limite de zone de couverture 14 correspondant aux stations d'ancrage. Les empreintes au sol des différentes zones de visibilité de deux satellites consécutifs S1, S2 par les terminaux utilisateurs et par les stations d'ancrage et de la zone de couverture sont représentées sur la figure 3. La zone de visibilité 12a, 12b des satellites par les stations d'ancrage, appelée zone de visibilité station, est plus grande que la zone de visibilité 11 a, 11 b des satellites par les terminaux utilisateurs, appelée zone de visibilité utilisateurs. En raison du défilement des satellites au-dessus de la zone de couverture, l'empreinte au sol des zones de visibilité d'un satellite par les terminaux utilisateurs 17 et par les stations d'ancrage sont mobiles au cours du temps. A chaque instant, la zone de couverture 13 est couverte par un, deux voire trois satellites consécutifs, chaque satellite étant régulièrement remplacé par un autre satellite lui succédant immédiatement dans l'ordre du sens de défilement 16 au-dessus de la zone de couverture 13. Par exemple, pour les deux zones polaires, l'hémisphère Nord est couvert par un, deux ou trois satellites consécutifs défilant au-dessus du pôle Nord et l'hémisphère Sud est couvert par un, deux ou trois autres satellites consécutifs défilant au-dessus du pôle Sud. Sur les figures 2 et 3, les zones de visibilité des deux satellites consécutifs S1 et S2 se recouvrent partiellement, la zone de recouvrement 15 correspondant à une zone de double visibilité.

Pour chaque zone de couverture incluant une région polaire, Nord ou Sud, le service continu est réalisé par un, deux ou trois satellites qui doivent relayer la liaison radiofréquence entre des terminaux utilisateurs situés à l'intérieur de la zone de couverture et des stations d'ancrage qui peuvent être situées à l'intérieur ou à l'extérieur de la zone de couverture. Un service peut être délivré à un terminal utilisateur si au moins un satellite est capable de voir simultanément le terminal utilisateur et une station d'ancrage pour relayer la liaison radiofréquence entre eux. Pour cela, le satellite doit avoir élaboré un faisceau vers le terminal et un faisceau vers la station d'ancrage.

Conformément à l'invention, les satellites étant constamment en mouvement sur l'orbite 10 et la Terre étant en rotation autour de l'axe 18 joignant les deux pôles, le système de communication doit régulièrement basculer les communications des terminaux utilisateurs 17 d'un premier satellite S1 sortant de la zone de visibilité vers un deuxième satellite S2 entrant dans la zone de visibilité et/ou d'une station d'ancrage vers une autre station d'ancrage.

Le système de communication doit donc être capable d'assurer plusieurs types de basculement pour assurer la continuité de service.

Le premier type de basculement consiste en un changement de satellite pour maintenir la liaison radiofréquence entre un terminal utilisateur et une station d'ancrage. Ce basculement se produit quand le terminal utilisateur et la station d'ancrage sont dans la zone de visibilité 15 de deux satellites successifs, S1, S2, appelée aussi zone de double visibilité ou zone de basculement.

Le deuxième type de basculement consiste en un changement de satellite et de station d'ancrage pour maintenir la communication entre un terminal utilisateur et un point de raccordement au réseau Internet 33 auquel est raccordé le système de télécommunication. Ce basculement se produit quand le terminal utilisateur est situé dans la zone de basculement 15 tandis que sa station d'ancrage ne voit pas le nouveau satellite ce qui nécessite de basculer la liaison radiofréquence vers une autre station d'ancrage vue par le nouveau satellite.

Le troisième type de basculement consiste en un changement de station d'ancrage. Ce basculement intervient quand un terminal utilisateur n'est pas dans une zone de basculement, c'est-à-dire qu'il n'est pas vu par deux satellites consécutifs, mais que la station d'ancrage qui le sert va sortir de la zone de visibilité du satellite ce qui nécessite de basculer la liaison radiofréquence vers une autre station d'ancrage vue par le même satellite.

Dans chacun des deux premiers types de basculement, le système de communication doit permettre que deux liaisons radiofréquence soient établies simultanément pendant une durée minimum afin d'organiser le basculement sans interruption de la communication.

Dans le troisième type de basculement, le système doit permettre au satellite de voir les deux stations d'ancrage pendant une durée minimum pour organiser le basculement.

Les basculements sont réalisés dans une zone de basculement correspondant à la zone de double visibilité 15 de deux satellites consécutifs. Dans cette zone de double visibilité ou les terminaux voient les deux satellites consécutifs simultanément, les deux satellites consécutifs peuvent communiquer avec les terminaux et avec les stations d'ancrage. La zone de double visibilité des deux satellites consécutifs permet de disposer d'une période de temps minimale pendant laquelle il est possible de réaliser un basculement (en anglais : hand-over) des communications entre les terminaux et des stations d'ancrage, d'un satellite sortant de la zone de visibilité sur un autre satellite entrant dans la zone de visibilité, sans interrompre la communication et d'assurer ainsi la continuité de service.

Chaque satellite comporte des antennes directionnelles fixes ou orientables pour élaborer respectivement des faisceaux utilisateurs avec une empreinte défilante au sol appelée cellules globales et des faisceaux avec une empreinte fixe au sol appelées cellules utilisateurs pour recouvrir tout ou partie de la zone de couverture 13.

En outre chaque satellite comporte des antennes directionnelles orientables pour élaborer des faisceaux station avec une empreinte fixe au sol pour les stations d'ancrage.

Les faisceaux utilisateurs sont orientables et peuvent être dirigés vers n'importe quel endroit de la zone de couverture selon la demande de trafic ce qui permet d'augmenter localement les ressources en terme de bande passante ou de débit de service. La direction de pointage de chaque faisceau est ajustée en continu pour compenser le mouvement du satellite. L'ajustement peut être réalisé par des antennes mécaniques ou actives ou hybrides. L'ajustement permet d'obtenir, pour chaque faisceau, une empreinte fixe au sol. Le faisceau global est fixe par rapport au satellite mais son empreinte au sol est mobile et suit le mouvement du satellite. Son empreinte au sol correspond à la zone de visibilité du satellite par les terminaux utilisateurs. Les faisceaux stations peuvent être pointés vers des stations d'ancrage situées à n'importe quel endroit dans la zone de visibilité du satellite par les stations d'ancrage.

Les stations d'ancrage peuvent être déployées à l'intérieur ou à l'extérieur de la zone de couverture mais doivent être localisées à proximité de moyens de communication terrestres permettant leur interconnexion au réseau Internet, les moyens de communication terrestres pouvant être par exemple un réseau de fibres optiques ou des faisceaux hertziens terrestres.

Actuellement, le déploiement des stations d'ancrage à l'extérieur de la zone de couverture est nécessaire au pôle Sud car l'interconnexion avec le réseau Internet mondial par moyens terrestres n'est possible que sur les continents sud-américain, par exemple le sud du Chili, océanique, par exemple le sud de la Nouvelle-Zélande, ou africain, par exemple l'Afrique du sud. Ces continents sont situés à des latitudes en-dehors de la zone de couverture. Mais pour le pôle Nord, les stations d'ancrage peuvent être déployées à l'intérieur de la zone de couverture.

En outre, la contrainte opérationnelle d'angle d'élévation minimum des stations d'ancrage pour permettre des communications correctes doit être respecté. Deux stations d'ancrage suffisent pour assurer un service continu sur une zone à proximité des stations d'ancrage.

Concernant les pôles, trois stations d'ancrage espacées angulairement les unes des autres par rapport au pôle peuvent être utilisées pour assurer un service continu sur toute la zone de couverture utilisateur incluant une région polaire délimitée par la latitude 60°. L'espacement angulaire en longitude entre deux stations d'ancrage doit idéalement être compris entre 80° et 160° pour compenser la rotation du plan orbital autour de la Terre et ainsi assurer un service continu sur tout partie de la zone de couverture délimitée par une latitude. Les trois stations d'ancrage peuvent par exemple être réparties autour de la zone de couverture de façon à former trois sommets d'un triangle centré sur l'axe de rotation de la Terre.

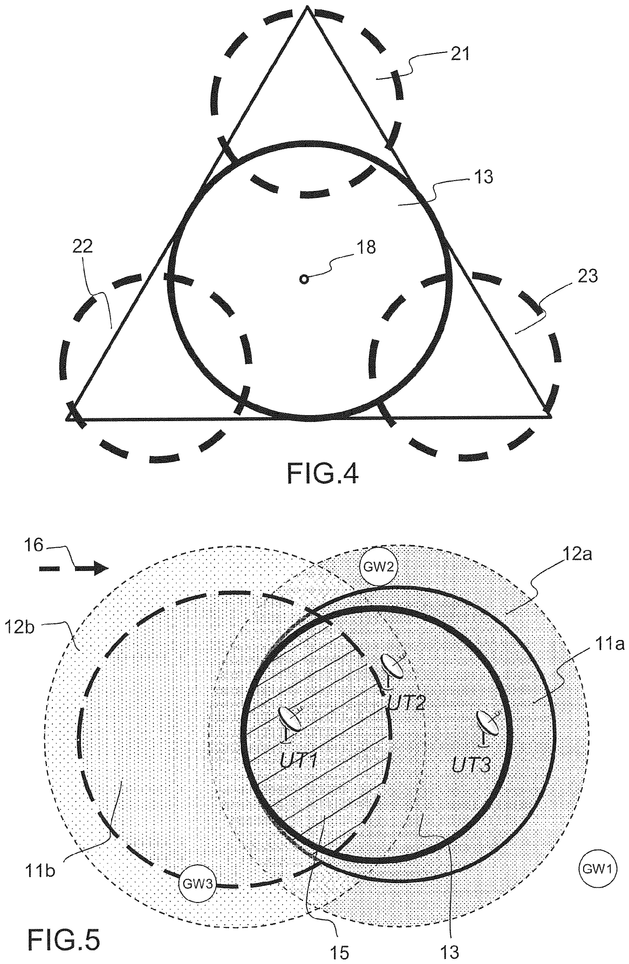

Comme représenté par exemple sur la figure 4, les trois stations d'ancrage peuvent être disposées à l'extérieur de la zone de couverture, par exemple dans trois zones respectives 21, 22, 23 espacées angulairement autour de la zone de couverture 13 et donc autour de l'axe de rotation Nord/Sud 18 de la Terre lorsque la zone de couverture est un pôle.

Selon l'emplacement des différents terminaux utilisateurs dans la zone de couverture et l'emplacement des stations d'ancrage à l'intérieur ou à l'extérieur de la zone de couverture, différentes phases successives de basculement peuvent être nécessaires pendant le défilement de deux satellites consécutifs au-dessus de chaque zone de couverture.

La figure 5 représente une première phase de basculement nécessitant un double basculement de station d'ancrage et de satellite. Dans cet exemple, trois terminaux utilisateurs UT1, UT2, UT3 sont situés dans la zone de couverture 13 et trois stations d'ancrage GW1, GW2, GW3 sont situées à l'extérieur de la zone de couverture. Dans cet exemple, tous les terminaux utilisateurs sont servis par un faisceau global provenant d'un satellite. Le sens 16 du défilement des satellites représenté par la flèche en pointillés, est supposé être un défilement horizontal de gauche à droite sur la figure 5. Les zones de visibilité des deux satellites consécutifs, respectivement entrant et sortant, évoluent dans le même sens que les satellites, donc de la gauche vers la droite. Dans cet exemple, tous les terminaux utilisateurs UT1, UT2, UT3 situés dans la zone de couverture 13 sont servis par la station d'ancrage GW2 par le satellite sortant puisque la station d'ancrage GW2 est localisée à l'intérieur de la zone de visibilité du satellite sortant. Cependant, le terminal utilisateur UT1 actuellement situé dans la zone de double visibilité 15 des deux satellites, c'est-à-dire dans la zone de basculement, va bientôt sortir de la zone de visibilité utilisateur 11a du satellite sortant. Il va donc être nécessaire de basculer cet utilisateur UT1 vers le satellite entrant. Comme la station d'ancrage GW2 n'est pas située dans la zone de visibilité station 12b du satellite entrant, il va également être nécessaire de basculer l'utilisateur UT1 vers la station d'ancrage GW3 qui est la seule située dans la zone de visibilité station 12b du satellite entrant. Dans cet exemple de configuration, pour assurer la continuité du service, un double basculement doit donc être réalisé pour remplacer simultanément le satellite sortant par le satellite entrant et la station d'ancrage GW2 par la station d'ancrage GW3. Aucun basculement n'est nécessaire pour les terminaux utilisateurs UT2 et UT3 situés à l'extérieur de la zone de basculement 15.

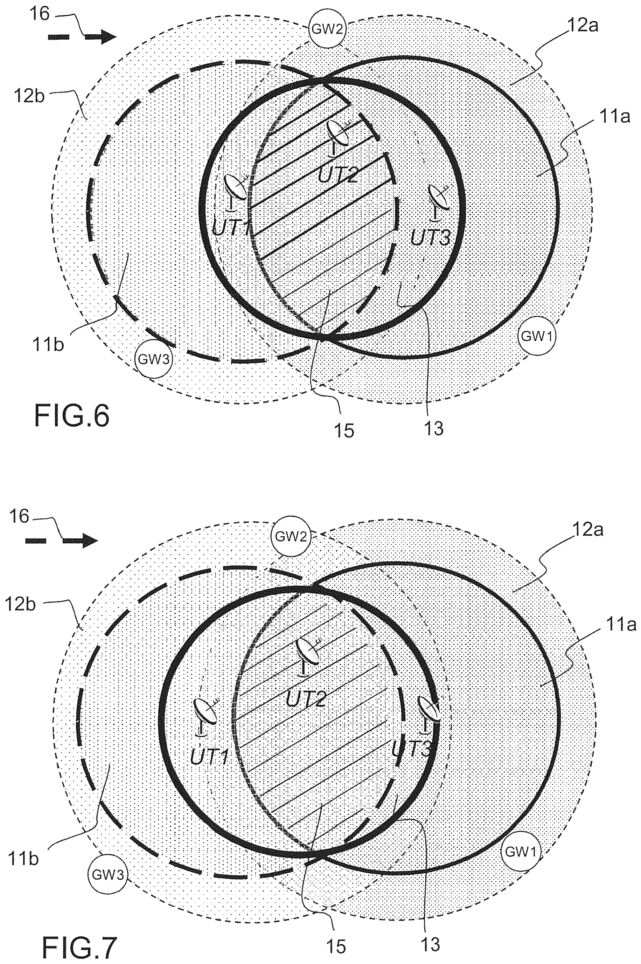

Pour la même configuration au sol des terminaux utilisateurs et des stations d'ancrage que celle de la figure 5, comme représenté sur la figure 6, après le basculement des terminaux utilisateurs UT1 qui sont maintenant servis par la station d'ancrage GW3 par l'intermédiaire du satellite entrant, une deuxième phase de basculement est nécessaire. Cette deuxième phase de basculement comporte un double basculement de station d'ancrage et de satellite pour l'un des utilisateurs UT2 comme décrit en liaison avec la figure 5, et un simple basculement de station d'ancrage pour un deuxième utilisateur UT3. En effet, étant donné le sens 16 du mouvement des satellites entrant et sortant, le terminal utilisateur UT2, actuellement situé dans la zone de basculement 15, va bientôt sortir de la zone de visibilité utilisateurs 11a du satellite sortant. Le terminal utilisateur UT2 se trouve donc dans la même situation que le terminal UT1 dans la première phase de basculement et doit donc subir le même type de basculement que celui décrit en liaison avec la figure 5. En outre, la station d'ancrage GW2 qui sert actuellement le terminal utilisateur UT3 par l'intermédiaire du satellite sortant va bientôt sortir de la zone de visibilité station 12a du satellite sortant et n'est pas encore dans la zone de visibilité station 12b du satellite entrant, il faut donc basculer les terminaux utilisateurs UT3 vers une autre station d'ancrage GW1 qui se trouve actuellement dans la zone de visibilité station 12a du satellite sortant.

Pour la même configuration au sol des terminaux et des stations d'ancrage que celle de la figure 5, comme représenté sur la figure 7, après le basculement des terminaux utilisateurs UT1 et UT2 qui sont maintenant servis par la station d'ancrage GW3 par l'intermédiaire du satellite entrant et le basculement des terminaux utilisateurs UT3 qui sont maintenant servis par la station d'ancrage GW1 par l'intermédiaire du satellite sortant, une troisième phase de basculement est nécessaire. En effet, la station d'ancrage GW3 va bientôt sortir de la zone de visibilité station 12b du satellite entrant et ne pourra plus servir les terminaux utilisateurs UT1 et UT2. Il est donc nécessaire de basculer ces deux terminaux utilisateurs vers la station d'ancrage GW2.

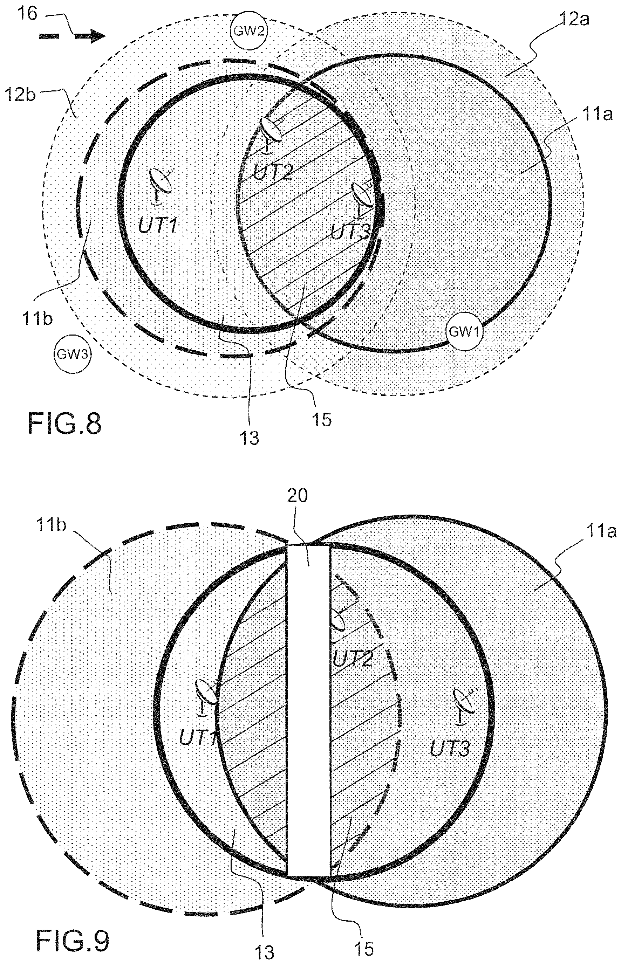

Pour la même configuration au sol des terminaux et des stations d'ancrage que celle de la figure 5, comme représenté sur la figure 8, une quatrième phase de basculement est nécessaire. En effet, le terminal utilisateur UT3 se trouve maintenant dans la zone de basculement 15 et va bientôt sortir de la zone de visibilité utilisateurs 11a du satellite sortant. Il faut donc le basculer sur le satellite entrant ainsi que sur la station d'ancrage GW2 qui est en zone de visibilité station 12b du satellite entrant. Aucun basculement des autres terminaux utilisateurs UT1 et UT2 n'est nécessaire dans cette quatrième phase.

Les quatre phases décrites en liaison avec les figures 5 à 8 se répètent au cours du temps, au rythme du défilement des satellites et les procédures de basculement peuvent donc être programmées à l'avance.

Suivant la taille des cellules utilisateurs, la procédure de basculement des terminaux utilisateurs d'une liaison radiofréquence à l'autre peut être réalisée de façon progressive ou simultanée. Quand le diamètre de la cellule utilisateur est supérieur à la largeur minimum de la zone de double visibilité 15, le basculement des terminaux ne peut être réalisé que progressivement. Dans les autres cas, il y a le choix entre un basculement progressif ou simultané des terminaux. La figure 9 illustre un exemple de basculement progressif avec la mise en évidence de la zone de double visibilité 15 dans laquelle peut s'effectuer le basculement des terminaux. Au fur et à mesure que cette zone de double visibilité 15 se déplace à la vitesse de défilement des satellites, l'ensemble des terminaux couverts par un faisceau global peut être basculé.

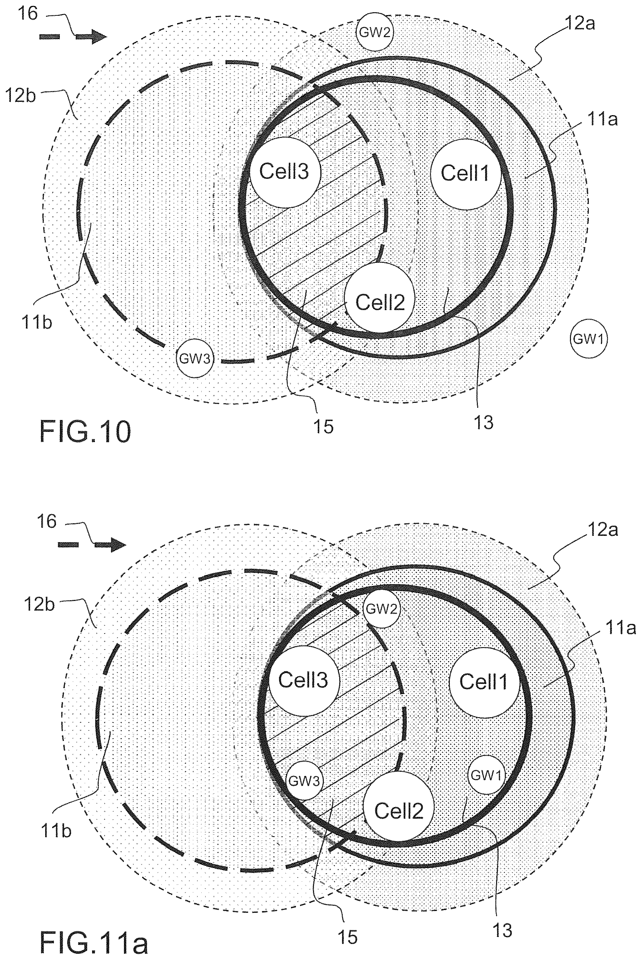

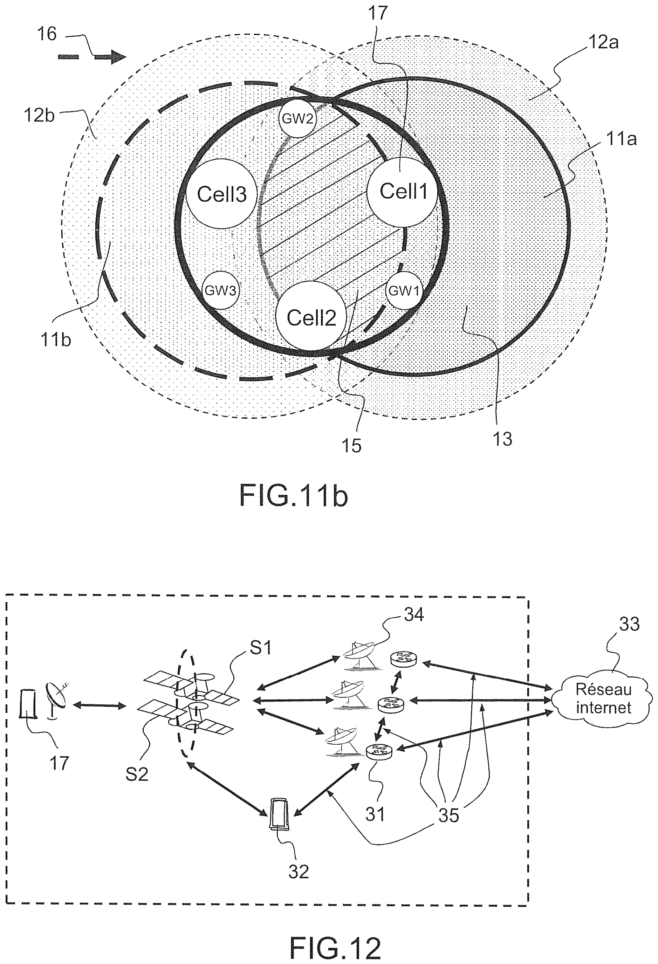

Les figures 10, 11a, 11b représentent des exemples de configuration dans laquelle des terminaux utilisateurs sont situés dans trois cellules utilisateurs cell1, cell2, cell3 différentes localisées à différents endroits de la zone de couverture. Dans l'exemple de la figure 10, les trois stations d'ancrage GW1, GW2, GW3 sont réparties à l'extérieur de la zone de couverture 13. Dans les figures 11 a et 11 b, trois stations d'ancrage GW1, GW2, GW3 sont réparties à l'intérieur de la zone de couverture 13, en trois régions différentes. La configuration des stations d'ancrage à l'intérieur de la zone de couverture n'est envisageable qu'au pôle Nord où le raccordement au réseau Internet est possible à l'intérieur de la zone de couverture. Dans la configuration de la figure 10, les cellules utilisateurs cell1 et cell2 sont servies par la station d'ancrage GW2 par l'intermédiaire du satellite sortant et ne nécessitent pas de basculement, alors que la cellule utilisateur cell3 actuellement servie par la station d'ancrage GW2 par l'intermédiaire du satellite sortant va devoir basculer sur la station d'ancrage GW3 et sur le satellite entrant.

Dans la configuration de la figure 11a, la cellule utilisateur cell1 est servie par la station d'ancrage GW1 par l'intermédiaire du satellite sortant, la cellule utilisateur cell2 est servie par la station d'ancrage GW2 par l'intermédiaire du satellite sortant et la cellule utilisateur cell3 est servie par la station d'ancrage GW3 par l'intermédiaire du satellite entrant. Aucun basculement n'est nécessaire pour le moment.

La figure 11b représente une phase de basculement nécessitant un basculement de satellite, pour une configuration au sol des cellules utilisateurs 17 et des stations d'ancrage identique à celle de la figure 11a. Dans cet exemple, la cellule utilisateur cell2 servie par la station d'ancrage GW2 par l'intermédiaire du satellite sortant se trouve dans la zone de basculement 15 et va bientôt sortir de la zone de visibilité station 12a du satellite sortant. Il est donc nécessaire de basculer collectivement tous les terminaux utilisateurs de cette cellule cell2 sur le satellite entrant. Aucun basculement de station d'ancrage n'est nécessaire.

Pour les terminaux utilisateurs mobiles d'une cellule utilisateur à une autre cellule utilisateur, le système de communication peut également organiser des basculements individuels.

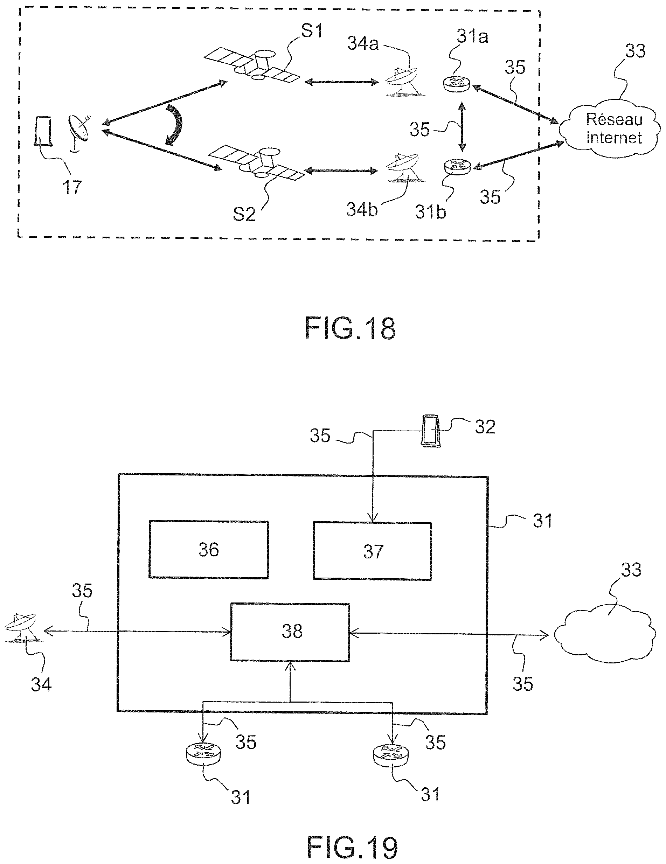

La figure 12 illustre un exemple d'architecture globale du système de communication par satellite, selon l'invention. Le système de communication comporte des terminaux utilisateurs 17 et des stations d'ancrage 34 qui servent les terminaux utilisateurs par l'intermédiaire d'un ou deux satellites S1, S2 de la constellation. Les satellites ont pour mission de relayer de façon transparente, les liaisons radiofréquence établies entre une ou plusieurs stations d'ancrage et un ensemble de cellules utilisateurs réparties dans la zone de couverture 13. Chaque station d'ancrage 34 est connectée au réseau Internet 33 par l'intermédiaire d'un réseau de routeurs 31. Les routeurs 31 dont un exemple d'architecture est représenté sur la figure 19, sont interconnectés entre eux par des voies 35 de communication locales dédiées et routent le trafic entre les cellules utilisateurs 17 et le réseau Internet 33 par l'intermédiaire des stations d'ancrage 34. Chaque routeur 31 comporte un récepteur de navigation 36, un dispositif de gestion des basculements 37 et un dispositif de routage 38 du trafic échangé entre chaque cellule utilisateur et un point d'accès du réseau internet 33. Chaque routeur 31 est responsable de l'aiguillage ou de la duplication du trafic entre les autres routeurs et les stations d'ancrage 34 servant les cellules utilisateurs. En outre, le système de communication comporte un centre 32 de planification des opérations du réseau (en anglais : Network Operation Centre ou NOC) qui détermine les occurrences et les types de basculement qui doivent être exécutés au cours du temps par les satellites, les stations d'ancrage et les routeurs, pour chacune des cellules utilisateurs ou pour chacun des terminaux isolés dans la zone de couverture 13 couverte par un faisceau global. Chacun des routeurs, stations d'ancrage, satellites sont équipés d'un récepteur de navigation qui leur permet de se synchroniser de façon temporelle avec le centre 32 de planification des opérations du réseau. Le centre 32 de planification des opérations du réseau est relié à chacune des stations d'ancrage et à chaque routeur par les voies 35 de communication terrestre ainsi qu'aux satellites par l'intermédiaire de stations de commande, de mesure et de télémétrie (en anglais : Telemetry, Command and Ranging Station ou TCR) qui sont en liaison radiofréquence avec tous les satellites de la constellation. Le centre 32 de planification des opérations est capable de contrôler les satellites, les stations d'ancrage et les routeurs via un réseau de communication local dédié et est capable d'horodater précisément les basculements à réaliser grâce à un récepteur de navigation. Il communique ce plan de basculement horodaté aux satellites et aux stations d'ancrage pour une exécution synchronisée de tous les basculements.

Le centre 32 de planification des opérations reçoit régulièrement les éphémérides réelles de chaque satellite S1, S2, ..., Sk de la constellation, où k est un nombre entier supérieur à un. A partir des éphémérides reçues, le centre 32 de planification des opérations calcule et planifie tous les basculements que chaque station d'ancrage 34 doit piloter au cours du temps. Le plan général de basculement est réalisé pour chaque cellule utilisateur 17 de la zone de couverture 13 et comporte l'instant initial et le délai pendant lequel doit être réalisé le basculement, le type de basculement à réaliser et quel satellite et/ou quelle station d'ancrage est concerné. Le centre 32 de planification des opérations transmet régulièrement des mises à jour du plan général de basculement à toutes les stations d'ancrage 34, aux satellites S1, S2,... Sk et aux routeurs 31.

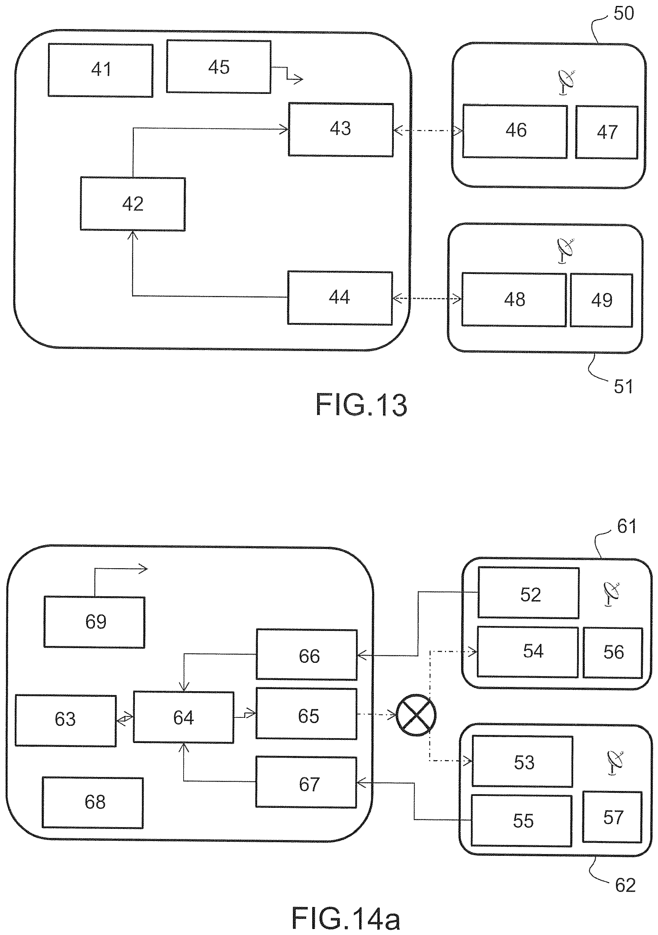

Grâce au plan général de basculement transmis par le centre 32 de planification des opérations, chaque station d'ancrage 34 connaît à tout moment les cellules utilisateur 17 qu'elle doit servir avec un faisceau utilisateur ou la zone qu'elle doit servir avec un faisceau global et par l'intermédiaire de quel satellite. Comme représenté schématiquement sur l'exemple d'architecture de la figure 13, pour réaliser les basculements entre deux satellites, chaque station d'ancrage 34 doit comporter au moins deux systèmes d'antennes directives orientables 50, 51, chaque système d'antennes permettant la poursuite d'un satellite. Chaque système d'antennes comporte une antenne d'émission et de réception respectivement associée à une chaîne d'émission et de réception dédiée 46, 48 et à une unité de contrôle dédiée 47, 49. Chaque système d'antennes est apte à poursuivre les satellites n'importe où au-dessus d'un angle d'élévation minimal prédéterminé, par exemple égal à 5°, et est apte à émettre et à recevoir des signaux radiofréquence modulés vers chaque cellule utilisateur, sur des liens aller et retour, simultanément par l'intermédiaire de deux satellites de la constellation. Chaque station d'ancrage 34 comporte une interface 42 avec un routeur 31 raccordé au réseau Internet 33, et deux dispositifs de modulation et de démodulation 43, 44 appelés modems, connectés à l'interface 42 et reliés à chacun des deux systèmes d'antennes d'émission et de réception 50, 51 pour assurer un service permanent continu. Chaque station d'ancrage est ainsi capable de pointer ses antennes vers deux satellites différents pour servir simultanément des cellules utilisateurs par l'intermédiaire des deux satellites. En outre, chaque station d'ancrage comporte plusieurs dispositifs de modulation et de démodulation permettant de servir toutes les cellules utilisateurs d'une zone de couverture par l'intermédiaire d'un seul satellite. Chaque station d'ancrage comporte un récepteur de navigation 41 pour recevoir des signaux de navigation provenant d'un système de navigation, par exemple de type GNSS (en anglais : Global Navigation Satellite System) pour se synchroniser avec les autres stations d'ancrage, avec le centre 32 de planification des opérations et avec les différents satellites. Chaque station d'ancrage 34 est responsable de l'allocation et de la gestion des ressources radiofréquence aux différents terminaux utilisateurs 17 sur les liens aller et retour de deux satellites consécutifs S1, S2 de la constellation sur lesquels sont pointées ses antennes ainsi que de la gestion des différents basculements (hand-over). Pour cela, chaque station d'ancrage comporte un dispositif de gestion 45 des ressources et des basculements relié aux deux unités de contrôle 47, 49 des deux systèmes d'antennes 50, 51. Le dispositif de gestion 45 des ressources et des basculements met à jour la liste des terminaux utilisateurs localisés dans chaque cellule, leurs statuts de connexion et leurs demandes de services. En outre, le dispositif de gestion 45 des ressources et des basculements comporte un plan général des ressources radiofréquence qui définit la configuration de toutes les porteuses utilisées dans les cellules utilisateurs, telle que la fréquence des porteuses, le code de modulation, le débit des données, la fenêtre de transmission. L'allocation dynamique des ressources radiofréquence aux terminaux utilisateurs, dépend des besoins en bande passante demandés par chaque terminal utilisateur.

Les stations d'ancrage exécutent les basculements programmés par le centre 32 de planification des opérations.

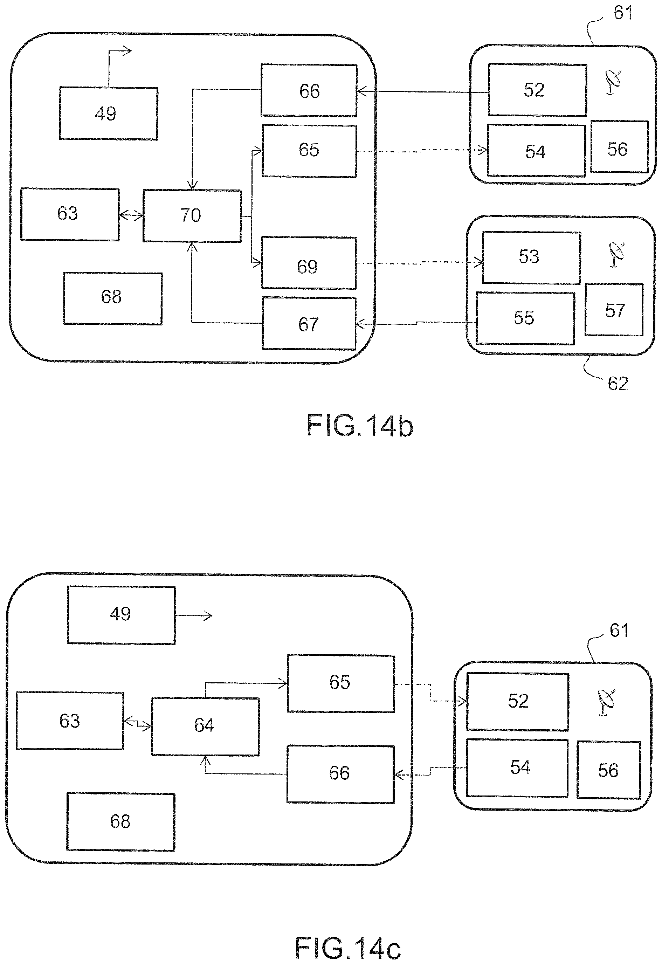

Comme représenté sur les exemples des figures 14a, 14b et 14c, chaque terminal utilisateur peut comporter une ou deux antennes directives d'émission et de réception 61, 62 aptes à poursuivre un satellite pour établir un lien radiofréquence. Chaque antenne est associée à une chaîne d'émission respective 52, 53, à une chaîne de réception respective 54, 55 et à une unité de contrôle respective 56, 57 et est capable de fonctionner avec un angle d'élévation supérieur à un angle d'élévation minimum prédéterminé. L'angle d'élévation des terminaux utilisateurs peut par exemple être compris entre 10° et 90°. La présence de deux antennes permet d'assurer un service permanent sans interruption temporaire lorsque la direction de pointage doit être modifiée. En effet, avec deux antennes il est possible d'établir simultanément un premier lien radiofréquence bidirectionnel avec un premier satellite et un deuxième lien radiofréquence bidirectionnel avec un deuxième satellite avant de réaliser le basculement des communications du premier satellite vers le deuxième satellite. Sur la figure 14a, chaque terminal utilisateur comporte une interface 63 destinée à être reliée à un réseau de communication terrestre local et un dispositif codeur/décodeur 64 de signaux relié à l'émission à un modulateur 65 et à la réception, à un premier démodulateur 66 et à un deuxième démodulateur 67. Le modulateur 65 et le premier démodulateur 66 permettent respectivement d'émettre et de recevoir des signaux vers une station d'ancrage 34 par l'intermédiaire d'un premier satellite S1. Le deuxième démodulateur 67 permet de synchroniser des signaux relayés par un second satellite S2, les signaux relayés provenant d'un lien aller de la même station d'ancrage 34. Cela permet de préparer le terminal utilisateur à un basculement de satellite sans interrompre la communication établie sur le lien aller. Le modulateur 65, le premier démodulateur 66 et le deuxième démodulateur 67 sont reliés aux deux antennes d'émission et de réception 61, 62. En cas de besoin, pour transmettre simultanément des signaux vers les terminaux utilisateurs par l'intermédiaire de deux satellites différents, il est possible d'ajouter un deuxième modulateur afin d'éviter de perdre des paquets de données sur le lien retour. Sur la figure 14b, le terminal utilisateur comporte un premier modulateur 65 et un premier démodulateur 66 relié à la première antenne d'émission et de réception 52 et un deuxième modulateur 69 et un deuxième démodulateur 67 reliés à la deuxième antenne d'émission et de réception 53. Les deux modulateurs 65, 69 et les deux démodulateurs 66, 67 sont reliés à l'interface 63 par l'intermédiaire d'un multiplexeur 70. Sur la figure 14c, le terminal utilisateur ne comportant qu'une seule antenne d'émission et de réception 61, un seul modulateur 65 et un seul démodulateur 66 sont nécessaires. Dans le cas d'une seule antenne, il n'est pas possible d'établir simultanément un premier lien radiofréquence bidirectionnel avec un premier satellite et un deuxième lien radiofréquence bidirectionnel avec un deuxième satellite et une interruption de service aura lieu pendant le basculement des satellites.

Chaque terminal utilisateur est régulièrement informé par les stations d'ancrage sur les éphémérides actualisés correspondant à chaque satellite, sur les basculements planifiés correspondant à la cellule dans laquelle il se trouve, sur les fréquences de porteuses à utiliser pour l'émission et la réception des signaux avec le nouveau satellite, sur la localisation des stations d'ancrage. Chaque terminal utilisateur est équipé d'un récepteur de navigation 68 permettant de synchroniser son horloge interne et d'obtenir des informations temporelles relatives aux différentes stations d'ancrage, au centre de planification des opérations et aux différents satellites. Chaque terminal utilisateur détermine les fenêtres temporelles pendant lesquelles il peut basculer de satellite selon la procédure planifiée et oriente le pointage de son antenne libre vers le nouveau satellite.

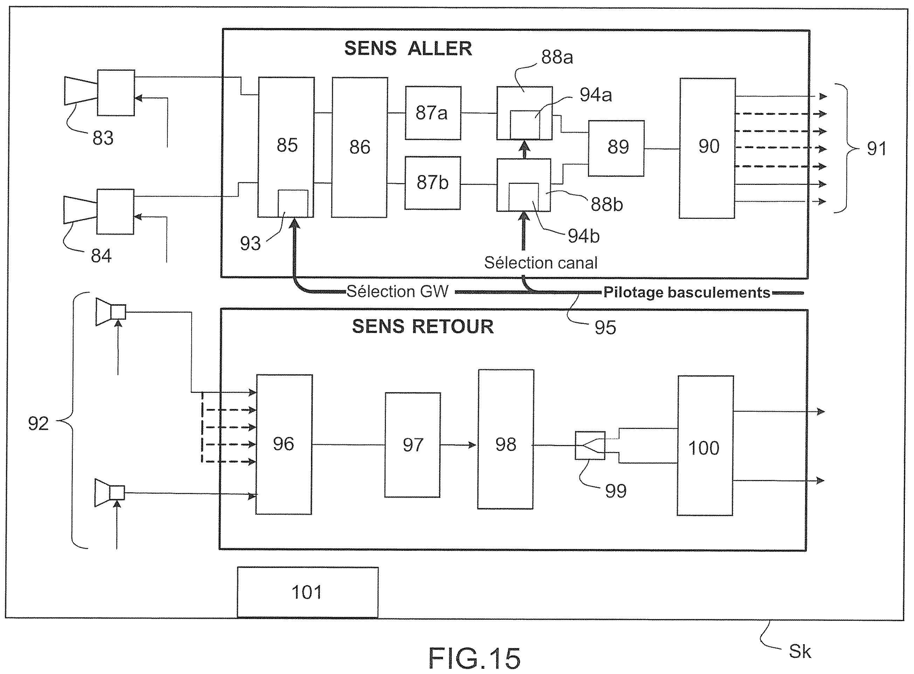

La figure 15 représente un exemple d'architecture de la charge utile d'un satellite Sk de la constellation dans le cas d'une double mission à multifaisceaux et à faisceau global. Dans cet exemple, la charge utile du satellite peut servir simultanément p cellules utilisateurs à partir de deux stations d'ancrage différentes et une zone de couverture globale. Chaque cellule utilisateur peut être servie par l'une ou l'autre des deux stations d'ancrage. Lorsqu'une cellule utilisateur doit subir un basculement de station d'ancrage, le satellite est capable de pointer simultanément ses deux antennes directives vers les deux stations d'ancrage qui sont concernées par le basculement. La charge utile du satellite comporte deux antennes directives d'émission et de réception 83, 84 destinées, dans le sens aller, à recevoir des signaux radiofréquence multiplexés provenant de deux stations d'ancrage différentes. Les deux antennes sont connectées à deux chaînes radiofréquence respectives permettant de router les signaux provenant de deux stations d'ancrage vers des cellules utilisateurs où se trouvent des terminaux utilisateurs. Chaque chaîne radiofréquence comporte un amplificateur à faible bruit 85, un convertisseur de fréquence 86 permettant de passer de la bande de fréquence de réception à la bande de fréquence d'émission, un démultiplexeur 87a, 87b permettant de séparer les signaux en p canaux indépendants fonctionnant dans p bandes de fréquence différentes destinées à servir p cellules utilisateurs différentes et p amplificateurs de canaux 88a, 88b permettant d'ajuster le gain de chaque canal. A leur sortie, les amplificateurs de canaux, des deux chaînes radiofréquence, dédiés à une même fréquence sont reliés deux à deux par p combineurs de signaux 89 avant d'être amplifiés par des amplificateurs de puissance 90 puis transmis d'une part par p antennes d'émission et de réception sous la forme de p faisceaux 91 différents aux cellules utilisateurs. Pour permettre d'assurer les basculements entre deux stations d'ancrage sans interrompre le service, l'amplificateur à faible bruit 85 de chaque chaîne radiofréquence est muni d'un dispositif de commutation 93 permettant d'activer ou de désactiver la réception des signaux sur l'antenne correspondante à laquelle il est relié et de sélectionner ainsi les signaux provenant d'une station d'ancrage GW prédéterminée. Le dispositif de commutation 93 peut être actionné avant et après chaque basculement de station d'ancrage. En outre, chaque amplificateur de canal 88a, 88b comporte aussi un dispositif de commutation 94a, 94b permettant d'activer ou de désactiver un canal et de sélectionner ainsi la station d'ancrage qui va servir une cellule utilisateur prédéterminée pendant un basculement de station d'ancrage. Les signaux de commande d'activation ou de désactivation 95 des amplificateurs à faible bruit et des amplificateurs de canaux sont pilotés par le calculateur bord à partir du plan général de basculement envoyé par le centre 32 de planification des opérations. Le récepteur de navigation 101 permet au satellite de synchroniser l'exécution des basculements avec les stations d'ancrage 34, les routeurs 31 et les terminaux utilisateurs 17 du système de communication.

Dans le sens retour, p faisceaux de signaux radiofréquence provenant des p cellules utilisateurs sont reçus par les p antennes d'émission et de réception 92 et traités par une chaîne radiofréquence. La chaîne radiofréquence comporte p amplificateurs à faible bruit 96, un multiplexeur de signaux 97 dans lequel les signaux des p faisceaux reçus sont combinés en fréquence. Les signaux combinés sont convertis en fréquence dans un convertisseur 98 puis divisés en deux signaux radiofréquence multiplexés indépendants par un diviseur de puissance 99 avant d'être amplifiés par des amplificateurs 100 et transmis par les deux antennes directives 83, 84 vers deux stations d'ancrage différentes.

Cette architecture permet une opération de basculement des communications d'une cellule utilisateur entre deux stations d'ancrage sans changer de satellite.

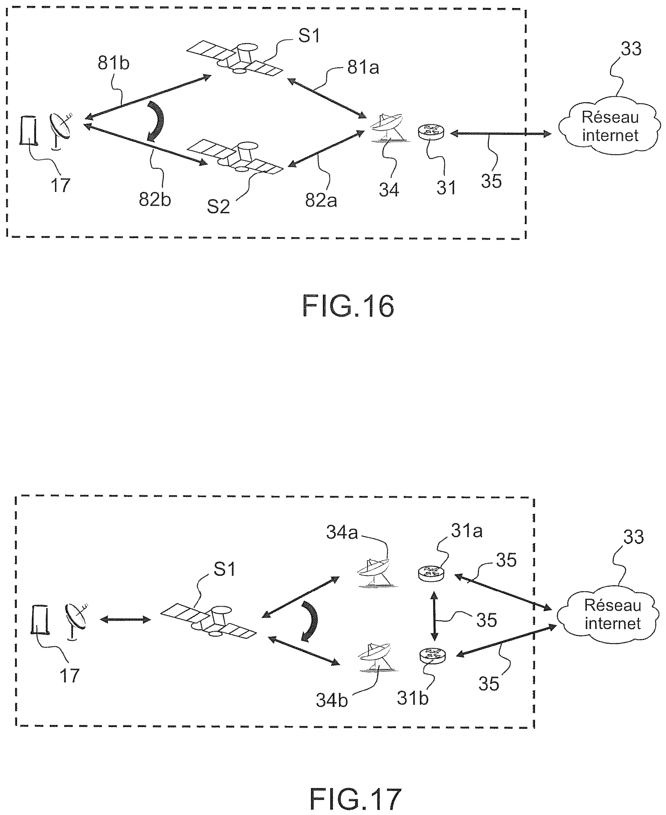

Un basculement des communications entre deux satellites doit être exécuté quand un terminal utilisateur peut continuer à être servi par la même station d'ancrage mais que le satellite qui relaye les communications entre le terminal utilisateur et la station d'ancrage doit être remplacé par un autre satellite comme représenté sur le schéma de la figure 16. Dans ce cas, le basculement du service du premier satellite S1 vers le deuxième satellite S2, programmé par le centre 32 de planification des opérations est initié par la station d'ancrage 34. Avant le basculement, la station d'ancrage 34 qui assure le service pour les cellules utilisateurs 17 comporte une première antenne pointée en direction d'un premier satellite S1, les communications entre la station d'ancrage 34 et le premier satellite étant réalisées par le premier lien radiofréquence bidirectionnel 81a. Les terminaux utilisateurs 17 localisés dans les cellules utilisateurs ont également leur première antenne pointée vers le premier satellite S1 avec lequel ils communiquent par l'intermédiaire du lien radiofréquence bidirectionnel 81 b. Pour réaliser un basculement, la station d'ancrage 34 synchronise son horloge interne sur l'horloge du deuxième satellite S2 et compense l'effet Doppler, c'est-à-dire le décalage de la fréquence porteuse, dû au mouvement du deuxième satellite par rapport à la station d'ancrage. La compensation de l'effet Doppler consiste en un recalage des fréquences porteuses utilisées sur le lien radiofréquence entre la station d'ancrage et le deuxième satellite. La station d'ancrage pointe ensuite sa deuxième antenne vers le deuxième satellite S2. Lorsque le pointage est terminé, la station d'ancrage 34 peut commencer à émettre et recevoir des signaux radiofréquence sur le deuxième lien radiofréquence 82a avec le deuxième satellite S2 en utilisant les mêmes fréquences porteuses que celles utilisées sur le premier lien radiofréquence 81 avec le premier satellite. Dès que le deuxième lien radiofréquence 82a est établi, le deuxième satellite S2 peut alors relayer les signaux radiofréquence entre la station d'ancrage 34 et les terminaux utilisateurs 17. La station d'ancrage envoie alors un signal de commande aux terminaux utilisateurs par l'intermédiaire de sa première antenne et du premier satellite S1 pour que les terminaux utilisateurs 17 pointent leur deuxième antenne vers le deuxième satellite S2. Dès que le pointage de la deuxième antenne des terminaux utilisateurs est terminée, les terminaux utilisateurs envoient un message à la station d'ancrage par l'intermédiaire de leur première antenne et du premier satellite S1 pour qu'elle supprime le premier lien radiofréquence 81a avec le premier satellite S1, puis ils peuvent couper leur premier lien radiofréquence 81 b vers le premier satellite et commencer à émettre sur le deuxième lien radiofréquence bidirectionnel 82b avec le deuxième satellite S2. Les terminaux utilisateurs envoient également un signal spécifique sur le deuxième lien radiofréquence 82b vers la station d'ancrage 34 par l'intermédiaire de leur deuxième antenne et du deuxième satellite S2. Le signal spécifique permet à la station d'ancrage de mesurer des erreurs de synchronisation de temps et de fréquence des terminaux utilisateurs et de transmettre aux terminaux utilisateurs, par l'intermédiaire du deuxième satellite, des ordres de correction des erreurs mesurées de façon à permettre la synchronisation des données transmises sur les liens aller et retour. La station d'ancrage envoie également un signal de commande au premier satellite pour qu'il arrête de relayer les signaux entre la station d'ancrage et les terminaux radiofréquence, puis la station d'ancrage arrête de transmettre des communications sur le premier lien radiofréquence avec le premier satellite. Cette procédure de basculement de satellite est particulièrement avantageuse car elle évite de transmettre des données simultanément sur deux liens radiofréquence 81a, 82a par l'intermédiaire de deux satellites et permet aux terminaux utilisateurs de n'avoir besoin que d'un seul modulateur et d'un seul codeur comme représenté sur la figure 14b au lieu de deux. Cependant, pendant le temps nécessaire à la synchronisation des terminaux utilisateurs, il peut y avoir une légère interruption du service si les terminaux utilisateurs ont coupé leur lien avec le premier satellite avant que la synchronisation soit établie. Si l'on souhaite éviter toute interruption de service, il est préférable de s'assurer que la synchronisation soit établie avant de couper la communication des terminaux utilisateurs avec le premier satellite et que les terminaux utilisateurs soient capables de communiquer simultanément avec les deux satellites pendant la synchronisation, ce qui peut être obtenu avec le mode de réalisation représenté sur la figure 14a.

La figure 17 représente un basculement des communications entre deux stations d'ancrage. Ce type de basculement est nécessaire lorsqu'une station d'ancrage 34a qui sert un terminal utilisateur 17 par l'intermédiaire d'un satellite S1, sort de la zone de visibilité de ce satellite S1 mais que le terminal utilisateur 17 est toujours dans la zone de visibilité de ce satellite, comme le montre en particulier, l'exemple de la figure 7. Les stations d'ancrage 34a, 34b étant toutes connectées entre elles par l'intermédiaire du réseau Internet mondial 33, elles communiquent entre elles par l'intermédiaire du réseau Internet. Suivant le programme de basculement établi par le centre 32 de planification des opérations, la deuxième station d'ancrage 34b qui comporte une antenne directive disponible pointe cette antenne disponible vers le même satellite S1 que la première station d'ancrage 34a et simultanément, synchronise son horloge interne et ses fréquences porteuses sur celles de la première station d'ancrage. Puis la première station d'ancrage 34a transmet à la deuxième station d'ancrage 34b, la liste des cellules utilisateurs à servir et les ressources radiofréquence dont elles ont besoin. La première station d'ancrage 34a demande en outre au routeur 31 a auquel elle est directement reliée de re-router le trafic des cellules utilisateurs vers la deuxième station d'ancrage 34b par l'intermédiaire du routeur 31 b auquel elle est reliée. Ensuite la deuxième station d'ancrage 34b peut commencer à communiquer avec les terminaux des cellules utilisateurs par l'intermédiaire du satellite en utilisant les mêmes fréquences porteuses que celles utilisées par la première station d'ancrage.

Dans le cas où il nécessaire de réaliser un double basculement des communications entre deux satellites S1, S2 et entre deux stations d'ancrage 34a, 34b, comme représenté sur l'exemple de la figure 18, la première station d'ancrage 34a qui sert les cellules utilisateurs 17 par l'intermédiaire du premier satellite S1, doit être remplacée par la deuxième station d'ancrage 34b et le premier satellite S1 doit être remplacé par le deuxième satellite S2. Les stations d'ancrage étant toutes connectées entre elles par l'intermédiaire du réseau Internet 33, elles communiquent entre elles par l'intermédiaire du réseau Internet. Suivant le programme de basculement établi par le centre 32 de planification des opérations, la deuxième station d'ancrage 34b qui comporte une antenne directive disponible pointe cette antenne disponible vers le deuxième satellite S2 et simultanément, synchronise son horloge interne et ses fréquences porteuses sur celles de la première station d'ancrage 34a. Puis la première station d'ancrage transmet à la deuxième station d'ancrage, la liste des cellules utilisateurs à servir et les ressources radiofréquence dont elles ont besoin. La première station d'ancrage demande en outre au routeur 31a auquel elle est reliée de re-router le trafic des cellules utilisateurs vers la deuxième station d'ancrage par l'intermédiaire du routeur 31 b et demande aux terminaux utilisateurs 17 de pointer leur deuxième antenne vers le deuxième satellite S2 Pendant que les terminaux utilisateurs pointent leur deuxième antenne par exemple à partir des éphémérides du deuxième satellite ou à partir de la poursuite d'un signal de balise du deuxième satellite, la première station d'ancrage commence à envoyer à la deuxième station d'ancrage, le plan des allocations des ressources à attribuer aux cellules utilisateurs. Ensuite la deuxième station d'ancrage peut commencer à communiquer avec les cellules utilisateurs par l'intermédiaire du deuxième satellite en utilisant les mêmes fréquences porteuses que celles utilisées par la première station d'ancrage avec le premier satellite et les terminaux utilisateurs peuvent commencer à acquérir les signaux transmis par la deuxième station d'ancrage par l'intermédiaire du deuxième satellite. Conformément au programme des basculements planifié par le centre 32 de planification des opérations, le deuxième satellite S2 peut alors commencer à relayer les signaux radiofréquence entre la deuxième station d'ancrage 34b et les cellules utilisateurs 17, et après une étape de synchronisation à partir d'un signal spécifique envoyé par les terminaux utilisateurs comme décrit ci-dessus en liaison avec la figure 16, le premier satellite peut arrêter de relayer les signaux radiofréquence entre les cellules utilisateurs et la première station d'ancrage. La première station d'ancrage peut alors arrêter de transmettre et de recevoir des signaux radiofréquence par l'intermédiaire du premier satellite.

Bien que l'invention ait été décrite en liaison avec des modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Système de communication par satellite pour un service continu d'accès haut débit sur une zone de couverture terrestre (13) incluant au moins une région polaire, comportant une constellation de satellites (S1, S2, ..., Sk) placés en orbite elliptique (10) autour de la Terre à basse ou moyenne altitude, des terminaux utilisateurs (17) localisés dans la zone de couverture (13), au moins deux stations d'ancrage (34) réparties à la surface de la Terre et aptes à assurer des communications bidirectionnelles avec les terminaux utilisateurs (17) par l'intermédiaire d'au moins un satellite défilant au-dessus de la zone de couverture, **caractérisé en ce qu'**il comporte en outre un réseau de routeurs (31) interconnectés entre eux et au réseau internet mondial (33) par des voies (35) de communication terrestres locales dédiées, **en ce que** chaque station d'ancrage (34) est reliée au réseau internet mondial (33) par l'intermédiaire du réseau de routeurs, et **en ce que** chaque station d'ancrage (34) comporte un dispositif de gestion (45) des ressources et des basculements apte à piloter des basculements des communications entre les satellites défilant successivement au-dessus de la zone de couverture, des basculements des communications entre les stations d'ancrage (34), et des double basculements simultanés des communications entre des satellites et entre des stations d'ancrage.

2. Système de communication par satellite selon la revendication 1, **caractérisé en ce que** chaque station d'ancrage (34), chaque routeur (31), chaque satellite (S1, S2, ..., Sk) et chaque terminal utilisateur (17) comporte un récepteur de navigation respectif (41, 68) leur permettant de se synchroniser entre eux et de synchroniser tous les basculements des communications entre les satellites et/ou les stations d'ancrage.

3. Système de communication par satellite selon l'une quelconque des revendications 1 ou 2, **caractérisé en ce que**, à chaque instant, les terminaux utilisateurs (17) et les stations d'ancrage (34) assurant les communications vers les terminaux utilisateurs sont situés dans une zone de visibilité d'au moins un satellite et **en ce que** les zones de visibilité de deux satellites consécutifs (S1, S2) comportent une zone de recouvrement appelée zone de basculement (15), les basculements des communications à destination d'un terminal utilisateur (17) étant réalisés lorsque le terminal utilisateur (17) se trouve dans la zone de basculement (15).

4. Système de communication par satellite selon l'une quelconque des revendications 1 à 3, **caractérisé en ce qu'**il comporte en outre un centre (32) de planification des opérations raccordé aux stations d'ancrage (34) par l'intermédiaire du réseau de routeurs (31), le centre (32) de planification des opérations étant apte à recevoir régulièrement les éphémérides de chaque satellite de la constellation et à élaborer un plan général de tous les basculements des communications à réaliser successivement au cours du temps entre les satellites et/ou entre les stations d'ancrage.

5. Système de communication par satellite selon l'une quelconque des revendications précédentes, **caractérisé en ce que** chaque station d'ancrage comporte au moins deux antennes directives orientables (50, 51) respectivement associées à deux chaînes d'émission et de réception de signaux multiplexés en fréquence, aptes à être respectivement pointées vers deux satellites consécutifs (S1, S2) de la constellation et à servir une ou plusieurs cellules utilisateurs simultanément par l'intermédiaire d'un ou de deux satellites consécutifs de la constellation.

6. Système de communication par satellite selon la revendication 5, **caractérisé en ce que** chaque terminal utilisateur (17) comporte au moins une antenne directive (61) associée à au moins une chaîne (52, 54) d'émission et de réception d'un signal radiofréquence sur des liens radiofréquence bidirectionnels établis par une ou deux stations d'ancrage avec un ou deux satellites de la constellation.

7. Système de communication par satellite selon l'une des revendications précédentes, **caractérisé en ce que** chaque satellite de la constellation comporte deux antennes directives (83, 84) orientables associées à des chaînes d'émission et de réception de signaux radiofréquence pour relayer des liaisons radiofréquence établies par deux stations d'ancrage différentes (34a, 34b) vers des cellules utilisateurs et des moyens de commutation (93, 94a, 94b) aptes à activer ou interrompre une ou plusieurs liaisons radiofréquence établies par l'une ou l'autre des deux stations d'ancrage avec les cellules utilisateurs.

8. Système de communication par satellite selon l'une des revendications précédentes, **caractérisé en ce qu'**il comporte au moins deux stations d'ancrage (34a, 34b) situées à l'intérieur ou à l'extérieur de la zone de couverture (13).

9. Système de communication par satellite à service continu selon l'une des revendications précédentes, **caractérisé en ce qu'**il comporte deux zones de couverture (13) couvrant les deux régions polaires arctiques et antarctiques, une constellation de satellites (S1, S2,..., Sk) placés en orbite (10) elliptique autour de la Terre, sur un seul plan orbital incliné d'un angle compris entre 60° et 90° par rapport au plan équatorial terrestre, les satellites étant répartis autour de la Terre à une altitude inférieure ou égale à 20000 km, des terminaux utilisateurs (17) localisés dans les deux zones de couverture constituées des deux zones polaires aux latitudes respectivement supérieure à +60° et inférieure à-60°, et au moins deux stations d'ancrage (34) par zone de couverture polaire.

10. Système de communication par satellite à service continu selon l'une des revendications 1 à 8, **caractérisé en ce qu'**il comporte une zone de couverture (13) incluant au moins une des deux régions polaires arctiques et antarctiques, une constellation de satellites (S1, S2,..., Sk) placés en orbite (10) elliptique autour de la Terre, sur plusieurs plan orbitaux équidistants les uns des autres et inclinés d'un angle compris entre 60° et 90° par rapport au plan équatorial terrestre, les satellites étant répartis autour de la Terre à une altitude inférieure ou égale à 20000 km, des terminaux utilisateurs (17) localisés dans la zone de couverture, et un ensemble de stations d'ancrage (34) réparties sur la zone de couverture.

11. Système de communication par satellite selon l'une des revendications précédentes, **caractérisé en ce que** l'orbite (10) est circulaire et les satellites sont equi-répartis autour de la Terre à une altitude inférieure ou égale à 20000 km pour assurer une continuité de service sur une zone de couverture incluant au moins l'une des deux régions polaires et pour assurer des basculements des communications, successifs au cours du temps, entre les satellites et entre les stations d'ancrage.

## Patentansprüche

1. Satellitenkommunikationssystem für einen kontinuierlichen Breitbandzugangsdienst über einen terrestrischen Versorgungsbereich (13) mit wenigstens einer Polarregion, umfassend eine Satellitenkonstellation (S1, S2, ..., Sk), die sich in einer elliptischen Umlaufbahn (10) um die Erde in einer geringen oder mittleren Höhe befindet, Benutzerendgeräte (17), die sich in dem Versorgungsbereich (13) befinden, wenigstens zwei Ankerstationen (34), die über die Oberfläche der Erde verteilt sind und zum Gewährleisten von bidirektionalen Kommunikationen mit den Benutzerendgeräten (17) mit Hilfe von wenigstens einem über den Versorgungsbereich passierenden Satelliten ausgelegt sind, **dadurch gekennzeichnet, dass** es ferner ein Netzwerk von Routern (31) umfasst, die miteinander und mit dem World Wide Web (33) durch dedizierte lokale terrestrische Kommunikationskanäle (35) verbunden sind, dadurch, dass jede Ankerstation (34) mit dem World Wide Web (33) über das Netzwerk von Routern verbunden ist, und dadurch, dass jede Ankerstation (34) ein Gerät (45) zum Verwalten von Ressourcen und Umschaltungen umfasst, das zum Steuern von Umschaltungen von Kommunikationen zwischen den Satelliten, die nacheinander über den Versorgungsbereich passieren, Umschaltungen von Kommunikationen zwischen den Ankerstationen (34) und gleichzeitigen Doppelumschaltungen von Kommunikationen zwischen den Satelliten und zwischen den Ankerstationen ausgelegt ist.

2. Satellitenkommunikationssystem nach Anspruch 1, **dadurch gekennzeichnet, dass** jede Ankerstation (34), jeder Router (31), jeder Satellit (S1, S2, ..., Sk) und jedes Benutzerendgerät (17) einen jeweiligen Navigationsempfänger (41, 68) umfasst, der es zulässt, sich miteinander zu synchronisieren und alle Umschaltungen von Kommunikationen zwischen den Satelliten und/oder den Ankerstationen zu synchronisieren.

3. Satellitenkommunikationssystem nach Anspruch 1 oder 2, **dadurch gekennzeichnet, dass** sich die Benutzerendgeräte (17) und die Ankerstationen (34), die die Kommunikationen zu dem Benutzerendgeräten gewährleisten, in jedem Augenblick in einem Sichtbereich von wenigstens einem Satelliten befinden, und dadurch, dass die Sichtbereiche von zwei konsekutiven Satelliten (S1, S2) einen als Umschaltbereich (15) bezeichneten Versorgungsbereich umfassen, wobei die für ein Benutzerendgerät (17) bestimmten Kommunikationsumschaltungen durchgeführt werden, wenn sich das Benutzerendgerät (17) im Umschaltbereich (15) befindet.

4. Satellitenkommunikationssystem nach einem der Ansprüche 1 bis 3, **dadurch gekennzeichnet, dass** es ferner ein Operationsplanungszentrum (32) umfasst, das mit den Ankerstationen (34) über das Netzwerk von Routern (31) verbunden ist, wobei das Operationsplanungszentrum (32) zum regelmäßigen Empfangen der Ephemeriden jedes Satelliten der Konstellation und zum Ausarbeiten eines allgemeinen Plans für alle Umschaltungen von Kommunikationen zur aufeinanderfolgenden Durchführung über die Zeit zwischen Satelliten und/oder zwischen den Ankerstationen ausgelegt ist.

5. Satellitenkommunikationssystem nach einem der vorherigen Ansprüche, **dadurch gekennzeichnet, dass** jede Ankerstation wenigstens zwei orientierbare Richtungsantennen (50, 51) umfasst, die jeweils mit zwei Ketten zum Senden und Empfangen von frequenzgemultiplexten Signalen assoziiert sind, wobei die Antennen so ausgelegt sind, dass sie jeweils auf zwei konsekutiven Satelliten (S1, S2) der Konstellation gerichtet werden können und eine oder mehrere Benutzerzellen gleichzeitig mit einem oder zwei konsekutiven Satelliten der Konstellation bedienen können.

6. Satellitenkommunikationssystem nach Anspruch 5, **dadurch gekennzeichnet, dass** jedes Benutzerendgerät (17) wenigstens eine Richtungsantenne (61) umfasst, die mit wenigstens einer Kette (52, 54) zum Senden und Empfangen eines Funkfrequenzsignals auf durch eine oder zwei Ankerstationen mit einem oder zwei Satelliten der Konstellation aufgebauten bidirektionalen Funkfrequenzverbindungen assoziiert ist.

7. Satellitenkommunikationssystem nach einem der vorherigen Ansprüche, **dadurch gekennzeichnet, dass** jeder Satellit der Konstellation zwei orientierbare Richtungsantennen (83, 84) umfasst, die mit Ketten zum Senden und Empfangen von Funkfrequenzsignalen assoziiert sind, zum Übertragen von durch zwei unterschiedliche Ankerstationen (34a, 34b) aufgebaute Funkfrequenzverbindungen zu Benutzerzellen, und Schaltmittel (93, 94a, 94b) zum Aktivieren oder Unterbrechen von einer oder mehreren Funkfrequenzverbindungen, die durch eine oder die andere der beiden Ankerstationen mit den Benutzerzellen aufgebaut sind.

8. Satellitenkommunikationssystem nach einem der vorherigen Ansprüche, **dadurch gekennzeichnet, dass** es wenigstens zwei Ankerstationen (34a, 34b) umfasst, die sich innerhalb oder außerhalb des Versorgungsbereichs (13) befinden.

9. Satellitenkommunikationssystem für einen kontinuierlichen Dienst nach einem der vorherigen Ansprüche, **dadurch gekennzeichnet, dass** es zwei Versorgungsbereiche (13) umfasst, die die beiden arktischen und antarktischen Polarregionen versorgen, eine Konstellation von Satelliten (S1, S2, ..., Sk), die in einer elliptischen Umlaufbahn (10) um die Erde platziert sind, auf einer einzigen Umlaufebene, die in einem Winkel zwischen 60° und 90° relativ zur terrestrischen Äquatorialebene geneigt ist, wobei die Satelliten in einer Höhe von gleich oder weniger als 20 000 km um die Erde verteilt sind, Benutzerendgeräte (17), die sich in den zwei Versorgungsbereichen bestehend aus zwei Polarbereichen in Breitengraden befinden, die jeweils höher als +60° und niedriger als - 60° sind, und wenigstens zwei Ankerstationen (34) pro polarem Versorgungsbereich.

10. Satellitenkommunikationssystem für einen kontinuierlichen Dienst nach einem der Ansprüche 1 bis 8, **dadurch gekennzeichnet, dass** es einen Versorgungsbereich (13) umfasst, der Folgendes beinhaltet: wenigstens eine der beiden arktischen und antarktischen Polarregionen, eine Konstellation von Satelliten (S1, S2, ..., Sk), die in einer elliptischen Umlaufbahn (10) um die Erde platziert sind, auf mehreren Umlaufebenen in gleichen Entfernungen voneinander und in einem Winkel zwischen 60° und 90° relativ zur terrestrischen Äquatorialebene geneigt, wobei die Satelliten in einer Höhe von gleich oder weniger als 20 000 km um die Erde verteilt sind, Benutzerendgeräte (17), die sich in dem Versorgungsbereich befinden, und einen Satz von zwei Ankerstationen (34), die über den Versorgungsbereich verteilt sind.

11. Satellitenkommunikationssystem nach einem der vorherigen Ansprüche, **dadurch gekennzeichnet, dass** die Umlaufbahn (10) kreisförmig ist und die Satelliten gleichmäßig, in einer Höhe von gleich oder weniger als 20 000 km um die Erde verteilt sind, um einen kontinuierlichen Dienst über einen Versorgungsbereich zu gewährleisten, der wenigstens eine der zwei Polarregionen beinhaltet, und um Kommunikationsumschaltungen aufeinanderfolgend im Laufe der Zeit zwischen den Satelliten und zwischen den Ankerstationen zu gewährleisten.

## Claims

1. A satellite communication system for a continuous broadband access service over a terrestrial coverage area (13) including at least one polar region, comprising a satellite constellation (S1, S2, ..., Sk) placed in an elliptical orbit (10) around the earth at low or medium altitude, user terminals (17) located in said coverage area (13), at least two anchor stations (34) distributed over the surface of the earth and designed to provide bidirectional communications with said user terminals (17) by means of at least one satellite passing over said coverage area, **characterised in that** it further comprises a network of routers (31) interconnected to each other and to the worldwide web (33) by dedicated local terrestrial communication channels (35), **in that** each anchor station (34) is connected to said worldwide web (33) by means of said network of routers, and **in that** each anchor station (34) comprises a device (45) for managing resources and handovers that is designed to control handovers of communication between the satellites that successively pass over said coverage area, handovers of communication between said anchor stations (34) and simultaneous dual-handovers of communication between said satellites and between said anchor stations.

2. The satellite communication system according to claim 1, **characterised in that** each anchor station (34), each router (31), each satellite (S1, S2, ..., Sk) and each user terminal (17) comprises a respective navigation receiver (41, 68) that allows them to synchronise to each other and to synchronise all of the handovers of communication between said satellites and/or said anchor stations.

3. The satellite communication system according to claim 1 or 2, **characterised in that**, at each instant, said user terminals (17) and said anchor stations (34) providing the communications to said user terminals are located in an area of visibility of at least one satellite, and **in that** the areas of visibility of two consecutive satellites (S1, S2) comprise a coverage area called handover area (15), the handovers of communication intended for a user terminal (17) being carried out when said user terminal (17) is located in said handover area (15).

4. The satellite communication system according to any one of claims 1 to 3, **characterised in that** it further comprises an operations planning centre (32) that is connected to said anchor stations (34) by means of said network of routers (31), said operations planning centre (32) being designed to regularly receive the ephemerides of each satellite of said constellation and to develop a general plan of all of the handovers of communication to be successively carried out over time between said satellites and/or between said anchor stations.

5. The satellite communication system according to any one of the preceding claims, **characterised in that** each anchor station comprises at least two orientable directive antennae (50, 51) respectively associated with two chains for transmitting and receiving frequency multiplexed signals, which antennae are designed to be respectively pointed towards two consecutive satellites (S1, S2) of said constellation and to serve one or more user cells simultaneously by means of one or two consecutive satellites of said constellation.

6. The satellite communication system according to claim 5, **characterised in that** each user terminal (17) comprises at least one directive antenna (61) associated with at least one chain (52, 54) for transmitting and receiving a radiofrequency signal on bidirectional radiofrequency links established by one or two anchor stations with one or two satellites of said constellation.

7. The satellite communication system according to any one of the preceding claims, **characterised in that** each satellite of said constellation comprises two orientable directive antennae (83, 84) associated with chains for transmitting and receiving radiofrequency signals in order to relay radiofrequency links established by two different anchor stations (34a, 34b) to user cells and switching means (93, 94a, 94b) designed to activate or interrupt one or more radiofrequency links established by one or the other of said two anchor stations with said user cells.

8. The satellite communication system according to any one of the preceding claims, **characterised in that** it comprises at least two anchor stations (34a, 34b) located inside or outside of said coverage area (13).

9. The satellite communication system for a continuous service according to any one of the preceding claims, **characterised in that** it comprises two coverage areas (13) covering the two Arctic and Antarctic polar regions, a constellation of satellites (S1, S2, ..., Sk) placed in an elliptical orbit (10) around the earth, on a single orbital plane inclined by an angle between 60° and 90° relative to the terrestrial equatorial plane, said satellites being distributed around the earth at an altitude that is less than or equal to 20,000 km, user terminals (17) located in said two coverage areas made up of two polar areas at latitudes that are respectively higher than +60° and lower than -60°, and at least two anchor stations (34) per polar coverage area.

10. The satellite communication system for a continuous service according to any one of claims 1 to 8, **characterised in that** it comprises a coverage area (13) including at least one of the two Arctic and Antarctic polar regions, a constellation of satellites (S1, S2, ..., Sk) placed in an elliptical orbit (10) around the earth, on a plurality of orbital planes at equal distances from each other and inclined by an angle between 60° and 90° relative to the terrestrial equatorial plane, said satellites being distributed around the earth at an altitude that is less than or equal to 20,000 km, user terminals (17) located in said coverage area and a set of two anchor stations (34) distributed over said coverage area.

11. The satellite communication system according to any one of the preceding claims, **characterised in that** said orbit (10) is circular and said satellites are equally distributed around the earth at an altitude that is less than or equal to 20,000 km in order to provide a continuous service over a coverage area including at least one of said two polar regions and in order to provide handovers of communication, successively over time, between said satellites and between said anchor stations.
